(19) Europäisches Patentamt
European Patent Office
Office européen des brevets

(11) EP 2 572 160 B1

(12) EUROPÄISCHE PATENTSCHRIFT

(45) Veröffentlichungstag und Bekanntmachung des Hinweises auf die Patenterteilung:
**12.07.2017 Patentblatt 2017/28**

(21) Anmeldenummer: **11719232.8**

(22) Anmeldetag: **06.05.2011**

(51) Int Cl.:
***G01B 21/26*** (2006.01)

(86) Internationale Anmeldenummer:
**PCT/EP2011/057301**

(87) Internationale Veröffentlichungsnummer:
**WO 2011/144467 (24.11.2011 Gazette 2011/47)**

(54) **VERFAHREN UND VORRICHTUNG ZUR BESTIMMUNG EINER ACHSGEOMETRIE EINES FAHRZEUGS**

METHOD AND DEVICE FOR DETERMINING AN AXLE GEOMETRY OF A VEHICLE

PROCÉDÉ ET DISPOSITIF POUR LA DÉTERMINATION D'UNE GÉOMÉTRIE D'ESSIEU D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2010 DE 102010029058**

(43) Veröffentlichungstag der Anmeldung:
**27.03.2013 Patentblatt 2013/13**

(73) Patentinhaber: **Robert Bosch GmbH**
**70442 Stuttgart (DE)**

(72) Erfinder: **ABRAHAM, Steffen**
**31134 Hildesheim (DE)**

(56) Entgegenhaltungen:
**WO-A2-2006/130694      DE-A1- 19 757 763**
**US-A- 5 014 227      US-A- 5 218 556**

**Beschreibung**

Stand der Technik

Die Erfindung bezieht sich auf ein Verfahren und eine Vorrichtung zur Bestimmung einer Achsgeometrie eines Fahrzeugs.

Die Erfindung bezieht sich insbesondere auf die Prüfung und Messung der Lenkgeometrie während der Achsvermessung, konkret auf die 3D-Bestimmung der Lenkachse ("Spreizachse") mit den Kenngrößen Spreizungswinkel, Nachlaufwinkel, Nachlaufstrecke und Lenkrollradius.

Im Rahmen einer Achsvermessung werden Spur- und Sturzwinkel des Fahrzeuges bestimmt und gegebenenfalls eingestellt. Eine weitere Teilaufgabe der Achsvermessung ist die Prüfung der Lenkgeometrie. Dies erfolgt durch Messen der Bewegung eines Rades während einer Lenkbewegung. In der Regel werden dabei der Spreizungs- und der Nachlaufwinkel gemessen.

Die Kenngrößen der Lenkgeometrie sind abhängig von der mechanischen Gestaltung der Lenkung. Es wird zwischen klassischen Geometrien, die eine feste Spreizachse haben, und sogenannten Raumlenkerachsen unterschieden. Kenngrößen zur Beschreibung der Lenkgeometrie mit fester Spreizachse wie z.B Spreizungswinkel, Nachlaufwinkel, Nachlaufstrecke und Lenkrollradius sind in der DIN 70000 definiert.

Zur Bestimmung der Kenngrößen erfolgt üblicherweise eine Messung des Spurwinkels und des Sturzwinkels während einer Lenkbewegung ("Lenkradeinschlagroutine"). Aus den Spur- und Sturzwerten des Rades bei verschiedenen Radlenkwinkeln werden nachfolgend die Größen Spreizungswinkel und Nachlaufwinkel berechnet.

In "HUNTER ENGINEERING CO, BRIDGETON, MO, USA: "STEERING GEOMETRY AND CASTER MEASUREMENT", SAE TECHNICAL PAPER SERIES, Nr. 850219, 1985, Seiten 1-10, XP008068693 WARRENDALE, PA, USA" beschreibt Daniel B. January die Berechnung des Spreizungs- und des Nachlaufwinkels aus zwei Einzelmessungen, die während einer Radeinschlagbewegung durchgeführt werden. Da nur zwei Einzelmessungen durchgeführt werden, führen Messfehler der nur zwei Spur- und Sturzmessungen zu entsprechend großen Fehlern bei der Berechnung der Lenkgeometrie.

In EP 1 739 390 B1 wird die Verknüpfung von mehr als zwei Spur- und Sturzmessungen beschrieben, um die Messgenauigkeit durch das Anpassen ("Fitten") eines Polynoms an die Messkurven der Spur- und Sturzwinkel zu erhöhen.

Die Spur- und Sturzmessung kann durch verschiedene bekannte Verfahren zur Achsvermessung erfolgen. Neuere Verfahren zur Achsvermessung erlauben eine optische Messung der Achsgeometrie über eine 3D-Erfassung der Radbewegung. In diesen Verfahren werden die geometrische 3D-Position und Ausrichtung der Drehachse und des Drehzentrums der Räder ermittelt. Dies kann durch die Messung von sogenannten Targets mit optischen Zielmarken am Rad (siehe z.B. DE 197 57 763 A1, EP 1 042 643 B1) oder durch die dreidimensionale Erfassung der Oberfläche des Rades, z.B. durch die Projektion eines Musters auf die Radoberfläche, erfolgen (siehe z.B. EP 187 51 64 B1, WO 2008/046715 A1).

Weitere Verfahren zur Spreizmessung sind aus den Dokumenten US 5 014 227 A, US 5 218 556 A, WO 2006/130694A2 und DE 197 57 763 A1 bekannt.

Offenbarung der Erfindung

Aufgabe der Erfindung ist die Bereitstellung eines Verfahrens, welches es ermöglicht, die Achsgeometrie einfach mit hoher Genauigkeit zu bestimmen.

Diese Aufgabe wird durch ein Verfahren nach dem unabhängigen Patentanspruch 1 und eine Vorrichtung nach dem unabhängigen Patentanspruch 10 gelöst. Die abhängigen Patentansprüche 1 bis 9 beschreiben vorteilhafte Ausgestaltungen des erfindungsgemäßen Verfahrens.

Ein Grundgedanke der Erfindung ist die 3D-Berechnung der Parameter der Spreizachse aus der Drehachse und dem Drehzentrum des Rades bei verschiedenen Radlenkwinkeln unter Verwendung eines kinematischen Modells der Lenkungsgeometrie, wobei die Drehachse und das Drehzentrum des Rades über eine 3D-Messung der Radlage, z.B. durch die Messung von optischen Targets am Rad oder mittels eines 3D-Oberflächenmodells des Rades, bestimmt werden.

Eine optische Messung der 3D-Achsgeometrie erlaubt eine 3D-Erfassung der Radbewegung während des gesamten Messvorganges. Für die Lenkeinschlagsmessung bedeutet dies, dass zu jedem Zeitpunkt der Messung die 3D-Position des Drehzentrums des Rades und der 3D-Richtungsvektor der Raddrehachse bekannt sind. Diese Messgrößen werden erfindungsgemäß für die 3D-Berechnung der Spreizachse verwendet.

Insbesondere umfasst ein erfindungsgemäßes Verfahren zur Bestimmung einer Achsgeometrie eines Fahrzeugs, ein an einer Achse des Fahrzeugs befestigtes Rad auf mehrere Einlenkpositionen mit verschiedenen Radlenkwinkeln einzulenken und die räumlichen Lage des Rades an den verschiedenen Einlenkpositionen zu messen. Aus den Ergebnissen der Messung der räumlichen Lage des Rades an den verschiedenen Einlenkpositionen wird die jeweilige Drehachse des Rades bestimmt. Die Parameter eines parametrischen Modells der Spreizachse werden so angepasst, dass die aus der Messung der räumlichen Lage bestimmten Drehachsen des Rades möglichst gut mit den aus dem parametrischen Modell berechneten Drehachsen übereinstimmen. Kenngrößen der Achsgeometrie werden dann aus dem so angepassten parametrischen Modell der Spreizachse berechnet.

Die so bestimmbaren Kenngrößen der Achsgeometrie umfassen insbesondere den Spreizungswinkel und den Nachlaufwinkel.

Vorteilhafterweise umfasst das erfindungsgemäße Verfahren auch die Bestimmung des jeweiligen Drehzentrums des Rades an den verschiedenen Einlenkpositionen und das parametrische Modell der Spreizachse umfasst auch das Drehzentrum des Rades. In diesem Fall können aus dem parametrischen Modell zusätzlich zum Spreizungswinkel und zum Nachlaufwinkel auch die Nachlaufstrecke und der Lenkrollradius bestimmt werden.

Mit einem solchen Verfahren sind die vier Kenngrößen der Spreizachse während der Achsvermessung durch eine direkte Berechnung der Parameter der Spreizachse ohne den bisher üblichen Umweg über die Ermittlung der Spur- und Sturzwerte bestimmbar.

Die vollständige Modellierung der 3D-Bewegungsgeometrie ermöglicht es, die Parameter der Spreizachse mit hoher Genauigkeit zu bestimmen.

In einer Ausführungsform des erfindungsgemäßen Verfahrens erfolgt das Anpassen des parametrischen Modells der Spreizachse an die aus der 3D-Messung bestimmten Drehachsen unter Verwendung der Methode kleinster Quadrate. Die Methode kleinster Quadrate stellt ein zuverlässig und einfach zu implementierendes Verfahren zur Anpassung des parametrischen Modells der Spreizachse an die gemessenen Werte dar.

In einer Ausführungsform umfasst das Messen der räumlichen Lage des Rades das optische Erfassen und Auswerten wenigstens einer Oberfläche des Rades. Das optische Erfassen und Auswerten wenigstens einer Oberfläche des Rades, wie es beispielsweise aus EP 187 51 64 B1 und WO 2008/046715 A1 bekannt ist, ermöglicht eine besonders einfache und genaue Bestimmung der räumlichen Lage des Rades.

In einer Ausführungsform umfasst das Verfahren die Transformation der Ergebnisse der 3D-Messung in ein fahrzeugfestes Koordinatensystem. Dazu wird die Bewegung des Fahrzeugs beispielsweise durch eine fortlaufende Messung des Drehzentrums und/oder des Drehvektors wenigstens eines Rades, das an einer nicht gelenkten Achse des Fahrzeugs angebracht ist, bestimmt.

Durch die Transformation in ein fahrzeugfestes Koordinatensystem werden während des Messvorgangs auftretende Fahrzeugbewegungen kompensiert. Die Messung kann so mit hoher Genauigkeit auch dann durchgeführt werden, wenn sich das Fahrzeug während des Messvorgangs bewegt. Die Zuverlässigkeit des Messverfahrens wird erhöht und seine Durchführung vereinfacht.

In einer Ausführungsform umfasst das Einschlagen des Rades nur eine kleine, differenzielle Auslenkung aus der Geradeausstellung, insbesondere eine Auslenkung von nicht mehr als 5°. Bei einer differenziellen Auslenkung kann auch die Achsgeometrie von Fahrzeugen mit einer sogenannten Raumlenkerachse zuverlässig bestimmt werden. Insbesondere können die geometrischen Größen der Momentanschraubachse bestimmt und daraus die 3D-Größen der Spreizachse abgeleitet werden.

In einer Ausführungsform werden statt des Lenkrollradius der Lenkhebelarm am Radmittelpunkt und der Lenkhebelarm in der Fahrbahnebene bestimmt. So können weitere Parameter der Lenkgeometrie bestimmt werden.

In einer Ausführungsform umfasst das Verfahren den Vergleich der gemessenen Ist-Bewegung des Rades mit einer hinterlegten Soll-Bewegung des Rades. So kann die Qualität der Achsgeometrie des Fahrzeugs bestimmt werden. Insbesondere können Verzerrungen der Achsgeometrie, wie sie zum Beispiel durch Unfallschäden am Fahrzeug verursacht werden, festgestellt und bewertet werden.

Die Ist-Werte können beispielsweise in Form einer Tabelle in einem Speicher hinterlegt sein. In der Tabelle nicht vorhandene Zwischenwerte können zusätzlich durch Interpolation berechnet werden.

In einer Ausführungsform ist die hinterlegte Soll-Bewegung des Rades eine Funktion des Radlenkwinkels und/oder des Einfederzustandes des Fahrzeuges. Dies ermöglicht einen besonders genauen Vergleich der Ist-Bewegung des Rades mit der hinterlegten Soll-Bewegung. Insbesondere werden Fehler bei der Bewertung der Achsgeometrie, die durch unterschiedliche Radlenkwinkel und/oder Einfederzustände des Fahrzeugs verursacht werden, zuverlässig vermieden.

In einer Ausführungsform umfasst das parametrische Modell auch eine geometrische Modellierung der kinematischen Kette der Radaufhängung, die z.B. aus Gelenken, Stab-, Dreiecks- oder Trapezlenkern besteht. Dies ermöglicht die Bestimmung und/oder Kontrolle ausgewählter Bewegungsparameter der Lenkungsgeometrie.

Ein Ausführungsbeispiel der Erfindung wird im Folgenden anhand der beigefügten Figuren näher erläutert. Dabei zeigt:

Figur 1 eine schematische Ansicht eines Messplatzes zur Durchführung einer erfindungsgemäßen Fahrwerksvermessung;

Figur 2 eine schematische Ansicht einer 3D-Punktwolke eines Rades mit einer aus einem 3D-Oberflächenmodell des Rades berechneten Drehachse des Rades;

Figur 3 eine schematische Frontansicht eines Rades mit ausgewählten Kenngrößen der Lenkgeometrie; und

Figur 4 eine schematische Seitenansicht eines Rades mit auswählten weiteren Kenngrößen der Lenkgeometrie.

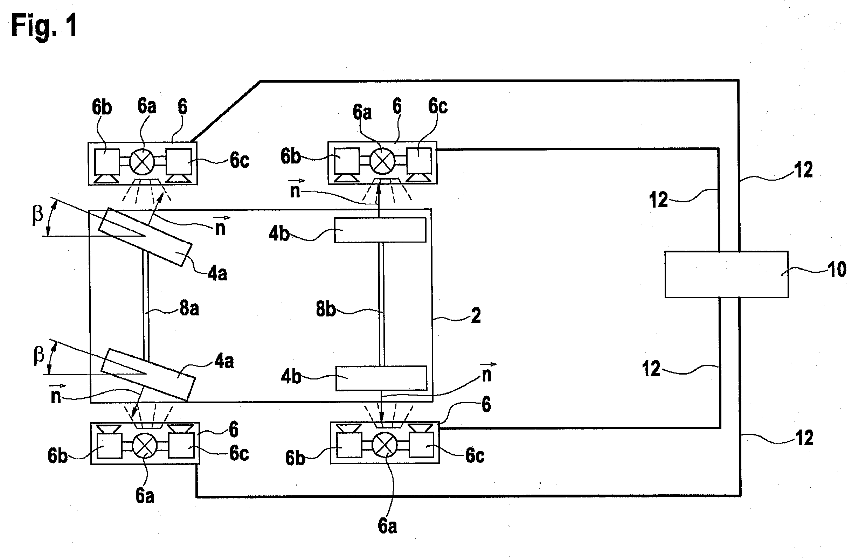

Figur 1 zeigt eine schematische Draufsicht auf einen Messplatz, der zur Durchführung einer erfindungsgemäßen Fahrwerksvermessung geeignet ist, mit einem an dem Messplatz angeordneten zu vermessenden Fahrzeug 2.

Das Fahrzeug 2 hat zwei Achsen 8a, 8b, eine Vorderachse 8a und eine Hinterachse 8b, die parallel zueinander im rechten Winkel zur Längserstreckung des Fahrzeugs 2 angeordnet sind.

An den beiden Enden der beiden Achsen 8a und 8b ist jeweils ein Rad 4a, 4b des Fahrzeugs 2 montiert. Die Räder 4a an der Vorderachse 8a sind lenkbar, die Räder 4b an der Hinterachse 8b sind starr. In der in der Figur 1 gezeigten Darstellung sind die Räder 4a, die an der Vorderachse 8a des Fahrzeugs 2 angebracht sind, um einen Radlenkwinkel $\beta$ aus der Geradeausstellung ausgelenkt.

Seitlich des Fahrzeugs 2 ist jedem der Räder 4a, 4b gegenüberliegend jeweils ein Messkopf 6 angeordnet. Jeder der vier Messköpfe 6 weist eine Beleuchtungseinrichtung 6a auf, die eingerichtet ist, um das dem jeweiligen Messkopf 6 gegenüberliegende Rad 4a, 4b des Fahrzeugs 2 zu beleuchten. Die Beleuchtungseinrichtungen 6a können so ausgebildet sein, dass sie das Rad 4a, 4b entweder homogen oder mit einem strukturierten Lichtmuster beleuchten. Insbesondere können die Beleuchtungseinrichtungen 6a jeweils einen Laser aufweisen und so ausgebildet sein, dass sie jeweils ein strukturiertes Laserlichtmuster erzeugen und auf das dem jeweiligen Messkopf 6 gegenüberliegende Rad 4a, 4b projizieren.

Zusätzlich zur Beleuchtungseinrichtung 6a weist jeder Messkopf 6 eine Stereo-Aufnahmeeinrichtung 6b, 6c auf, die in dem in der Figur 1 gezeigten Ausführungsbeispiel jeweils zwei Kameras 6b, 6c enthält, die voneinander beabstandet auf beiden Seiten der jeweiligen Beleuchtungseinrichtung 6a innerhalb des Messkopfes 6 angeordnet und auf das dem jeweiligen Messkopf 6 gegenüberliegende Rad 4a, 4b des Fahrzeugs 2 ausgerichtet sind. Jeder der Messköpfe 6 stellt so ein Stereobild des ihm gegenüberliegenden Rades 4a, 4b zur Verfügung.

Die Messköpfe 6 sind über elektrische Leitungen 12 mit einer Auswerteeinheit 10 verbunden, welche die von den Messköpfen 6 zur Verfügung gestellten Stereobilder auswertet, um die Achsgeometrie des Fahrzeugs 2 zu bestimmen.

In einer vereinfachten, in den Figuren nicht gezeigten Ausführungsform ist der Messplatz mit weniger als vier Messköpfen 6 ausgestattet. Insbesondere können nur zwei Messköpfe 6 vorgesehen sein, die auf einander gegenüberliegenden Seiten des Fahrzeugs 2 angeordnet sind. In diesem Fall ist die Achsvermessung für beide Achsen 8a, 8b in zwei getrennten, aufeinander folgenden Schritten durchzuführen.

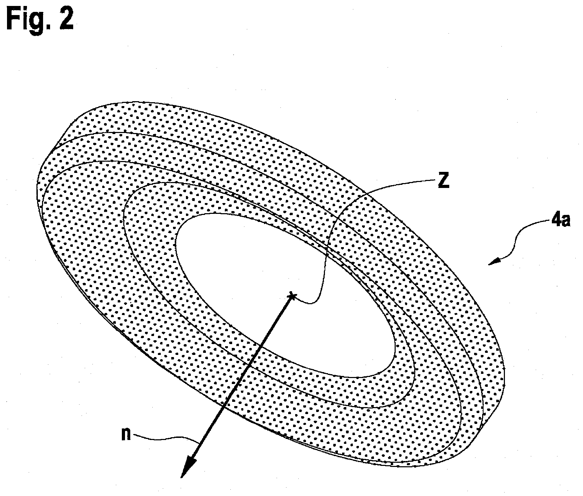

Figur 2 zeigt in einer schematischen Darstellung eine 3D-Messpunktwolke eines Rades 4a, wie sie aus einem von einem der Messköpfe 6 aufgenommenen Stereobild berechnet wird. Die Einzelheiten der Bestimmung einer 3D-Messpunktwolke aus einem Stereobild sind beispielsweise in EP 1 875 164 B1 beschrieben. Die Berechnung der Drehachse aus einer 3D-Messpunktwolke mit einem parametrischen Oberflächenmodell des Rades ist in WO 2008/046715 beschrieben.

Figur 2 zeigt weiterhin den Richtungsvektor n (Vektoren werden im Folgenden durch Fettdruck dargestellt) der Drehachse des Rades 4a, wie er aus einem parametrischen Modell des Rades 4a, welches, wie in WO 2008/ 046715 beschrieben, an die 3D-Messpunktwolke angepasst worden ist, bestimmbar ist.

Auch das in der Figur 2 gezeigte Drehzentrum Z des Rades 4a ist aus dem parametrischen Modell bestimmbar.

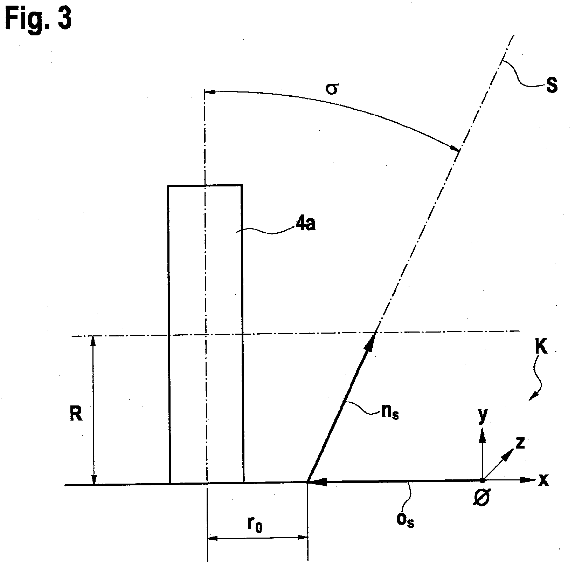

Figur 3 zeigt eine schematische Frontansicht eines Rades 4a mit einem Radradius R und einer Spreizachse S. In der Figur 3 sind weiterhin der Lenkrollradius $r_0$, der Spreizungswinkel $\sigma$, der Ortsvektor zur Spreizachse $\mathbf{o_s}$, der vom Ursprung Ø des fahrzeugfesten Koordinatensystems K auf die Spreizachse S zeigt, und der Richtungsvektor $\mathbf{n_s}$, der die Richtung der Spreizachse S angibt, gezeigt.

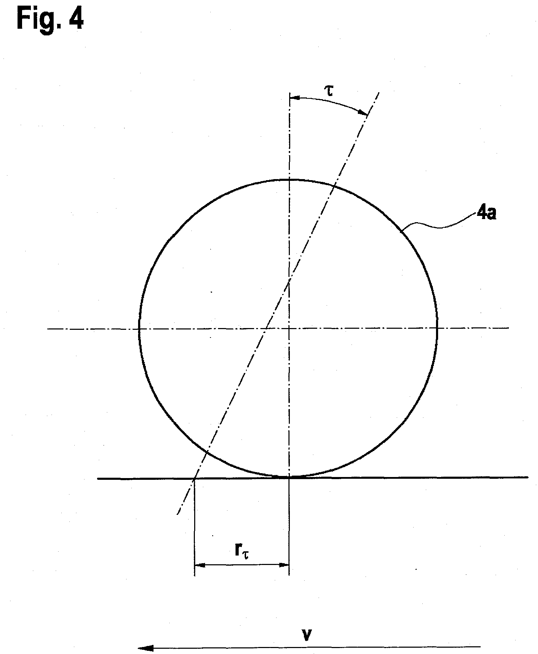

Figur 4 zeigt eine schematische Seitenansicht des Rades 4a, welches in der gezeigten Darstellung zur Bewegung entlang der Fahrtrichtung v von rechts nach links vorgesehen ist, wobei der Nachlaufwinkel $\tau$ und die Nachlaufstrecke $r_\tau$ gezeigt sind.

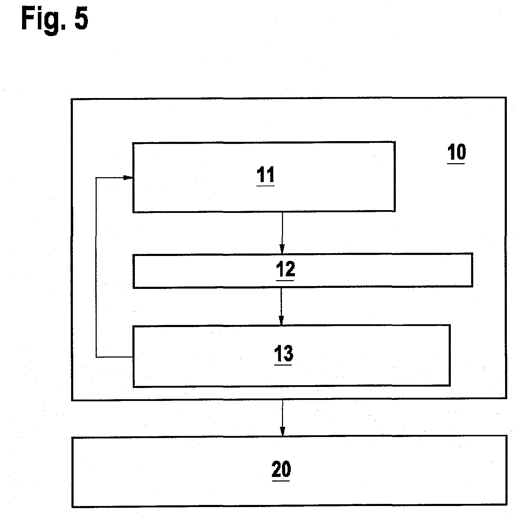

Figur 5 zeigt schematisch den Ablauf eines erfindungsgemäßen Verfahrens.

Zunächst wird die Lage des Rades 4a für mehrere Einlenkpositionen mit verschiedenen Radlenkwinkeln $\beta_i$ gemessen (Schritt 10).

Dazu wird das Rad 4a auf einen Radlenkwinkel $\beta_i$ eingelenkt, für den jeweiligen Radlenkwinkel $\beta_i$ wird wenigstens ein Stereobild des Rades 4a aufgenommen und aus dem Stereobild wird eine 3D-Messpunktwolke berechnet. Die Drehachse $\mathbf{n_i}$ sowie das Drehzentrum $\mathbf{Z_i}$ des Rades 4a werden durch Anpassen eines parametrischen Oberflächenmodells an die 3D-Messpunktwolke bestimmt (Schritt 11).

In einem alternativen Verfahren werden Bilder von an dem Rad 4a befestigten Zielmarken (Targets) aufgenommen, die Positionen der Zielmarken bestimmt und die Drehachse $\mathbf{n_i}$ sowie das Drehzentrum $\mathbf{Z_i}$ des Rades 4a aus den Positionen der Zielmarken berechnet.

Weiterhin wird eine eventuell vorhandene Bewegung des Fahrzeugs 2 bestimmt (Schritt 12) und die Drehachse $\mathbf{n_i}$ und das Drehzentrum $\mathbf{Z_i}$, die im Schritt 11 ermittelt worden sind, werden in ein fahrzeugfestes Koordinatensystem K transformiert (Schritt 13).

Diese Verfahrensschritte werden für m verschiedene Radlenkwinkel $\beta_i$ des Rades 4a wiederholt.

Als Ergebnis liegen m 3D-Koordinaten $\mathbf{x}_{Ki}$ des Drehzentrums $Z_i$ des Rades 4a und m 3D-Richtungsvektoren $\mathbf{n}_{Ki}$ der Drehachse des Rades 4a in einem euklidischen, fahrzeugfesten Koordinatensystem K für m verschiedene Radlenkwinkel $\beta_i$ während des jeweiligen Lenkeinschlages vor.

Die kinematische Modellierung der Spreizachse S mit einem Ortsvektor $\mathbf{o}_s$ und einem Richtungsvektor $n_s$

$$\mathbf{x}_{Ki}=R[\beta_i,n_s]x_D + (I - R[\beta_i,n_s])o_s= f_x[\beta_i,n_s,o_s,x_D]$$

$$n_{Ki}=R[\beta_i,n_s]n_D = f_x[\beta_i,n_s,o_s,n_D]$$

beschreibt die Bewegung des 3D-Drehzentrums $\mathbf{x}_D$ und des 3D-Drehvektors $\mathbf{n}_D$ in Abhängigkeit vom Radlenkwinkel $\beta_i$ zu jedem Zeitpunkt i (i=1...m) des Einlenkvorgangs. Die Spreizachse S entspricht dabei einer räumlichen Drehachse.

Der Vektor $\mathbf{o}_s$ ist der 3D-Ortsvektor zu einem Punkt auf der Spreizachse S und ist im Fahrzeugkoordinatensystem K definiert. Der Vektor $\mathbf{n}_s=[n_x, n_y, n_z]^T$ ist der 3D-Richtungsvektor der Spreizachse S (siehe Fig.3).

Aus dem Radlenkwinkel $\beta_i$ des Rades 4a um die Spreizachse S ergibt sich eine 3x3-Rotationsmatrix R, welche entsprechend der Formel von Rodrigues, siehe z.B. Murray, R. M.; Li, Z.; and Sastry, S. S., A Mathematical Introduction to Robotic Manipulation, FL: CRC Press, 1994, darstellbar ist:

$$\mathbf{R} = \left[\cos\beta\,\mathbf{I}+\sin\beta\,\mathbf{N}_x+(1-\cos\beta)\mathbf{n}_S\mathbf{n}_S^{\,T}\right]$$

$$=\cos\beta\begin{bmatrix}1 & 0 & 0\\ 0 & 1 & 0\\ 0 & 0 & 1\end{bmatrix}+\sin\beta\begin{bmatrix}0 & -n_z & n_y\\ n_z & 0 & -n_x\\ -n_y & n_x & 0\end{bmatrix}+(1-\cos\beta)\begin{bmatrix}n_x\\ n_y\\ n_z\end{bmatrix}\begin{bmatrix}n_x & n_y & n_z\end{bmatrix}$$

Der 3D-Richtungsvektor $\mathbf{n}_s$ der Spreizachse S kann bei geeigneter Definition derLage des Fahrzeugkoordinatensystems K in der Fahrbahnebene zweckmäßigerweise über die gesuchten geometrischen Winkel Nachlauf $\tau$ und Spreizung $\sigma$ parametrisiert werden.

Der 3D-Richtungsvektor $\mathbf{n}_s$ ist für die linke Seite:

$$\mathbf{n}_{SL} = \begin{bmatrix}-\tan\tau\\ -\tan\sigma\\ 1\end{bmatrix}$$

und für die rechte Seite:

$$\mathbf{n}_{SR} = \begin{bmatrix}-\tan\tau\\ \tan\sigma\\ 1\end{bmatrix}$$

Durch die Kombination der vorhandenen Messungen des Drehzentrums $\mathbf{x}_{Ki}$ und der Drehachse $\mathbf{n}_{Ki}$ mit der beschriebenen Modellierung der Spreizachse S werden im Schritt 20 mit bekannten Optimierungsverfahren, wie z.B. der Methode der kleinsten Quadrate

$$\sum_i \left\| \vec{\mathbf{x}}_{Ki} - \mathbf{f}_x(\beta_i, \vec{\mathbf{n}}_S, \vec{\mathbf{o}}_S, \vec{\mathbf{x}}_D) \right\|_2 + \sum_i \left\| \vec{\mathbf{n}}_{Ki} - \mathbf{f}_n(\beta_i, \vec{\mathbf{n}}_S, \vec{\mathbf{o}}_S, \vec{\mathbf{n}}_D) \right\|_2 \rightarrow \min$$

die 3D-Lage des Ortsvektors $\mathbf{n}_S$ und des Richtungsvektors $\mathbf{o}_S$ einer modellierten Spreizachse S, welche die beste Übereinstimmung mit den gemessenen Werten aufweist, bestimmt. Dies kann z.B. iterativ über eine Linearisierung der Gleichungen erfolgen. Aus dem so optimierten parametrischen Modell $f(\beta_i, \mathbf{n}_S, \mathbf{o}_S, \mathbf{n}_D)$ der Spreizachse S sind die Kenngrößen Spreizungswinkel $\sigma$, Nachlaufwinkel $\tau$, Lenkrollradius $r_0$ und Nachlaufstrecke $r_\tau$ durch geometrische Berechnungen bestimmbar.

Werden ausschließlich die gemessenen Drehachsen $\mathbf{n}_{Ki}$ und nicht auch die Drehzentren $\mathbf{x}_{Ki}$ des Rades 4a zur Berechnung der Achsgeometrie verwendet, ist eine ausschließliche Bestimmung des Spreizungswinkels $\sigma$ und des Nachlaufwinkels $\tau$ möglich, wobei auf die Bestimmung von Nachlaufstrecke $r_\tau$ und Lenkrollradius $r_0$ verzichtet wird:

$$\sum_i \left\| \vec{\mathbf{n}}_{Ki} - \mathbf{f}_n(\beta_i, \vec{\mathbf{n}}_S, \vec{\mathbf{o}}_S, \vec{\mathbf{n}}_D) \right\|_2 \rightarrow \min$$

Dies stellt ein vereinfachtes Verfahren zur Verfügung, das vorzugsweise dann verwendet wird, wenn auf die Bestimmung der Nachlaufstrecke $r_\tau$ und des Lenkrollradius $r_0$ verzichtet werden kann.

**Patentansprüche**

1. Verfahren zur Bestimmung des Spreizungswinkels ($\sigma$) und/oder des Nachlaufwinkels ($\tau$) einer Achsgeometrie eines Fahrzeugs (2), mit den Schritten:

   Einlenken eines an einer Achse (8a) des Fahrzeugs (2) befestigten Rades (4a) auf verschiedene Radlenkpositionen mit verschiedenen Radlenkwinkeln ($\beta_i$);
   Bestimmen der räumlichen Lage des Rades (4a) an den verschiedenen Radlenkpositionen;
   Bestimmen der Drehachse ($n_i$) des Rades (4a) an der jeweiligen Radlenkposition aus den Ergebnissen der Bestimmung der räumlichen Lage;
   Modellieren eines parametrischen Modells ($f(\beta_i, n_s, o_s, n_D)$) der Spreizachse (S), wobei $n_s$ der 3D-Richtungsvektor und $o_s$ der 3D-Ortsvektor der Spreizachse ist und $n_D$ der 3D-Richtungsvektor der Drehachse des Rades;
   Bestimmen der Drehachse des Rades (4a) aus dem parametrischen Modell ($f(\beta_i, n_s, o_s, n_D)$) der Spreizachse (S) für die verschiedenen Radlenkpositionen;
   Anpassen des parametrischen Modells ($f(\beta_i, n_s, o_s, n_D)$) der Spreizachse (S) an die aus der Messung der räumlichen Lage des Rades (4a) an den verschiedenen Radlenkpositionen bestimmten Drehachsen ($n_i$);
   Bestimmen des Spreizungswinkels ($\sigma$) und/oder des Nachlaufwinkels ($\tau$) aus dem angepassten parametrischen Modell ($f(\beta_i, n_s, o_s, n_D)$) der Spreizachse (S).

2. Verfahren nach Anspruch 1, wobei
   das Verfahren das Bestimmen des jeweiligen Drehzentrums (Z) des Rades (4a) an den verschiedenen Radlenkpositionen einschließt;
   das parametrische Modell ($f(\beta_i, n_s, o_s, n_D, x_D)$) der Spreizachse (S) das Drehzentrum (Z) des Rades (4a) einschließt, wobei $x_D$ das Drehzentrum des Rades ist;
   das Verfahren das Bestimmen der Nachlaufstrecke ($r_\tau$) und/oder des Lenkrollradius ($r_0$) aus dem angepassten parametrischen Modell ($f(\beta_i, n_s, o_D, n_D, x_D)$) der Spreizachse (S) einschließt.

3. Verfahren nach einem der vorangehenden Ansprüche, wobei das Bestimmen der räumlichen Lage des Rades (4a) das optische Erfassen und Auswerten von optischen Zielmarken am Rad (4a) oder wenigstens einer Oberfläche des Rades (4a) einschließt.

4. Verfahren nach einem der vorangehenden Ansprüche, wobei das Verfahren die Transformation der Ergebnisse der Bestimmung der räumlichen Lage des Rades (4a) in ein fahrzeugfestes Koordinatensystem (K) einschließt.

5. Verfahren nach einem der vorangehenden Ansprüche, wobei das Einschlagen des Rades (4a) nur eine kleine Auslenkung aus der Geradeausstellung umfasst, die einen Radlenkwinkel ($\beta_i$) von 5° nicht überschreitet.

**6.** Verfahren nach einem der vorangehenden Ansprüche, wobei der Lenkhebelarm am Radmittelpunkt (Z) oder der Lenkhebelarm in der Fahrbahnebene bestimmt werden.

**7.** Verfahren nach einem der vorangehenden Ansprüche, wobei das Verfahren umfasst, die gemessenen Ist-Bewegung des Rades (4a) mit einer hinterlegten Soll-Bewegung des Rades (4a) zu vergleichen.

**8.** Verfahren nach einem der vorangehenden Ansprüche, wobei das parametrische Modell ($f(\beta_i,n_s,o_s,n_D)$) der Sprei-zachse (S) eine geometrische Modellierung der kinematischen Kette der Lenkung umfasst.

**9.** Vorrichtung zur Bestimmung des Spreizungswinkel ($\sigma$) und/oder des Nachlaufwinkel ($\tau$) einer Achsgeometrie eines Fahrzeugs (2), mit jeweils mindestens einen Messkopf (6) gegenüber der Räder (4a,4b) eines Fahrzeuges (2), wobei jeder Messkopf (6) eine Beleuchtungseinrichtung (6a), die dazu ausgerichtet ist, dass sie das Rad (4a,4b) mit einem homogenen oder strukturellen Lichtmuster beleuchtet, und einer Stereoaufnahmevorrichtung (6b,6c), welche auf das dem jeweiligen Messkopf (6) gegenüberliegende Rad (4a,4b) ausgerichtet ist, aufweist, wobei die Messköpfe mit einer Auswerteeinheit (10) verbunden sind, die die Stereobilder der Messköpfe (6) auswertet, die räumlichen Lage des Rades (4a) an den verschiedenen Radlenkpositionen bestimmt und zur Durchführung der nachfolgenden Schritte eines Verfahrens nach einem der Ansprüche 1 bis 8 an einem Fahrzeug (2) ausgebildet ist.

## Claims

**1.** Method for determining the spread angle ($\sigma$) and/or the castor angle ($\tau$) of an axle geometry of a vehicle (2), comprising the steps:

steering a wheel (4a) fixed to an axle (8a) of the vehicle (2) to various wheel steering positions with various wheel steering angles ($\beta_i$);
determining the spatial position of the wheel (4a) at the various wheel steering positions;
determining the axis of rotation ($n_i$) of the wheel (4a) at the respective wheel steering position from the results of the determination of the spatial position;
modelling a parametric model ($f(\beta_i,n_s,o_s,n_D)$) of the spread axis (S), where $n_s$ is the 3D directional vector and $o_s$ is the 3D location vector of the spread axis, and $n_D$ is the 3D directional vector of the axis of rotation of the wheel;
determining the axis of rotation of the wheel (4a) from the parametric model ($f(\beta_i,n_s,o_s,n_D)$) of the spread axis (S) for the various wheel steering positions,
adapting the parametric model ($f(\beta_i,n_s,o_s,n_D)$) of the spread axis (S) to the axes of rotation ($n_i$) determined from the measurement of the spatial position of the wheel (4a) at the various wheel steering positions;
determining the spread angle ($\sigma$) and/or the castor angle ($\tau$) from the adapted parametric model ($f(\beta_i,n_s,o_s,n_D)$) of the spread axis (S).

**2.** Method according to Claim 1, wherein
the method includes determining the respective centre of rotation (Z) of the wheel (4a) at the various wheel steering positions;
the parametric model ($f(\beta_i,n_s,o_s,n_D,x_D)$) of the spread axis (S) includes the centre of rotation (Z) of the wheel (4a), where $x_D$ is the centre of rotation of the wheel;
the method includes determining the trail ($r_\tau$) and/or the steering rolling radius (ro) from the adapted parametric model ($f(\beta_i,n_s,o_s,n_D,x_D)$) of the spread axis (S).

**3.** Method according to one of the preceding claims, wherein the determination of the spatial position of the wheel (4a) includes the optical detection and evaluation of optical target marks on the wheel (4a) or at least one surface of the wheel (4a).

**4.** Method according to one of the preceding claims, wherein the method includes the transformation of the results of the determination of the spatial position of the wheel (4a) into a coordinate system (K) fixed on the vehicle.

**5.** Method according to one of the preceding claims, wherein the toe-in of the wheel (4a) comprises only a small deflection from the straight-ahead position, which does not exceed a wheel steering angle ($\beta_i$) of 5°.

6. Method according to one of the preceding claims, wherein the steering lever arm at the wheel centre (Z) or the steering lever arm in the roadway plane is determined.

7. Method according to one of the preceding claims, wherein the method comprises comparing the measured actual movement of the wheel (4a) with a stored reference movement of the wheel (4a).

8. Method according to one of the preceding claims, wherein the parametric model ($f(\beta_i, n_s, o_s, n_D)$) of the spread axis (S) comprises geometric modelling of the kinematic chain of the steering.

9. Device for determining the spread angle ($\sigma$) and/or the castor angle ($\tau$) of an axle geometry of a vehicle (2), having at least one measuring head (6) in each case opposite the wheels (4a, 4b) of a vehicle (2),
wherein each measuring head (6) has an illuminating device (6a), which is aligned in such a way that it illuminates the wheel (4a, 4b) with a homogeneous or structural light pattern,
and a stereo recording device (6b, 6c), which is aimed at the wheel (4a, 4b) opposite the respective measuring head (6),
wherein the measuring heads are connected to an evaluation unit (10), which evaluates the stereo images from the measuring heads (6), determines the spatial position of the wheel (4a) at the various wheel steering positions and is designed to carry out the following steps of a method according to one of Claims 1 to 8 on a vehicle (2).

**Revendications**

1. Procédé de détermination de l'angle de cambrage ($\sigma$) et/ou de l'angle de chasse ($\tau$) d'une géométrie d'essieu d'un véhicule (2), comprenant les étapes suivantes :

braquage d'une roue (4a) fixée à un essieu (8a) du véhicule (2) sur différentes positions de braquage de roue ayant des angles de braquage de roue ($\beta_i$) différents ;
détermination de la position dans l'espace de la roue (4a) aux différentes positions de braquage de roue ;
détermination de l'axe de rotation (ni) de la roue (4a) au niveau de la position de braquage de roue respective à partir des résultats de la détermination de la position dans l'espace ;
modélisation d'un modèle paramétrique ($f(\beta_i, n_s, o_s, n_D)$) de l'axe de cambrage (S), $n_s$ désignant le vecteur de direction 3D et $o_s$ le vecteur d'emplacement 3D de l'axe de cambrage, et $n_D$ désignant le vecteur de direction 3D de l'axe de rotation de la roue ;
détermination de l'axe de rotation de la roue (4a) à partir du modèle paramétrique ($f(\beta_i, n_s, o_s, n_D)$) de l'axe de cambrage (S) pour les différentes positions de braquage de roue ;
adaptation du modèle paramétrique ($f(\beta_i, n_s, o_s, n_D)$) de l'axe de cambrage (S) aux axes de rotation ($n_i$) déterminés à partir de la mesure de la position dans l'espace de la roue (4a) aux différentes positions de braquage de roue ;
détermination de l'angle de cambrage ($\sigma$) et/ou de l'angle de chasse ($\tau$) à partir du modèle paramétrique ($f(\beta_i, n_s, o_s, n_D)$) adapté de l'axe de cambrage (S).

2. Procédé selon la revendication 1,
le procédé incluant la détermination du centre de rotation (Z) correspondant de la roue (4a) aux différentes positions de braquage de roue ;
le modèle paramétrique ($f(\beta_i, n_s, o_s, n_D, x_D)$) de l'axe de cambrage (S) incluant le centre de rotation (Z) de la roue (4a), $x_D$ désignant le centre de rotation de la roue ;
le procédé incluant la détermination de la chasse au sol ($r_\tau$) et/ou du déport au sol (ro) à partir du modèle paramétrique ($f(\beta_i, n_s, o_s, n_D, x_D)$) de l'axe de cambrage (S).

3. Procédé selon l'une des revendications précédentes, la détermination de la position dans l'espace de la roue (4a) incluant la détection optique et l'interprétation de repères de visée optiques sur la roue (4a) ou d'au moins une surface de la roue (4a).

4. Procédé selon l'une des revendications précédentes, le procédé incluant la transformation des résultats de la détermination de la position dans l'espace de la roue (4a) dans un système de coordonnées (K) fixe du véhicule.

5. Procédé selon l'une des revendications précédentes, le braquage de la roue (4a) comprenant seulement une petite déviation par rapport à l'orientation en ligne droite, laquelle n'excède pas un angle de braquage de roue ($\beta_i$) de 5°.

**6.** Procédé selon l'une des revendications précédentes, le bras de levier de braquage au centre de la roue (Z) ou le bras de levier de braquage dans le plan de la voie de circulation étant déterminés.

**7.** Procédé selon l'une des revendications précédentes, le procédé comprenant la comparaison du mouvement réel mesuré de la roue (4a) avec un mouvement de consigne enregistré de la roue (4a).

**8.** Procédé selon l'une des revendications précédentes, le modèle paramétrique ($f(\beta_i, n_s, o_s, n_D)$) de l'axe de cambrage (S) comprenant une modélisation géométrique de la chaîne cinématique de la direction.

**9.** Dispositif de détermination de l'angle de cambrage ($\sigma$) et/ou de l'angle de chasse ($\tau$) d'une géométrie d'essieu d'un véhicule (2), comprenant respectivement au moins une tête de mesure (6) en face des roues (4a, 4b) d'un véhicule (2), chaque tête de mesure (6) possédant un dispositif d'éclairage (6a) qui est conçu pour éclairer la roue (4a, 4b) avec un modèle lumineux homogène ou structurel,
et un appareil d'enregistrement stéréoscopique (6b, 6c) qui est orienté sur la roue (4a, 4b) se trouvant en face de la tête de mesure (6) correspondante,
les têtes de mesure étant reliées à une unité d'interprétation (10) qui interprète les images stéréoscopiques des têtes de mesure (6), détermine la position dans l'espace de la roue (4a) aux différentes positions de braquage de roue et est configurée pour exécuter les étapes suivantes d'un procédé selon l'une des revendications 1 à 8 sur un véhicule (2).

Fig. 1

**Fig. 2**

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1739390 B1
- DE 19757763 A1
- EP 1042643 B1
- EP 1875164 B1
- WO 2008046715 A1
- US 5014227 A
- US 5218556 A
- WO 2006130694 A2
- WO 2008046715 A

**In der Beschreibung aufgeführte Nicht-Patentliteratur**

- STEERING GEOMETRY AND CASTER MEASURE-MENT. **DANIEL B.** SAE TECHNICAL PAPER SE-RIES. HUNTER ENGINEERING CO, 1985, 1-10
- **MURRAY, R. M. ; LI, Z. ; SASTRY, S. S.** A Mathematical Introduction to Robotic Manipulation. CRC Press, 1994